(19) Europäisches Patentamt
European Patent Office
Office européen des brevets

(11) EP 3 369 712 A1

(12) **EUROPEAN PATENT APPLICATION**
published in accordance with Art. 153(4) EPC

(43) Date of publication:
**05.09.2018 Bulletin 2018/36**

(21) Application number: **16859446.3**

(22) Date of filing: **23.09.2016**

(51) Int Cl.:
***C02F 1/56*** *(2006.01)*
***B01D 21/01*** *(2006.01)*
***C08F 8/48*** *(2006.01)*
***C08F 220/34*** *(2006.01)*
***C08F 220/44*** *(2006.01)*
***C08F 220/56*** *(2006.01)*
*C02F 1/52* *(2006.01)*

(86) International application number:
**PCT/JP2016/077966**

(87) International publication number:
**WO 2017/073209 (04.05.2017 Gazette 2017/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.10.2015 JP 2015212260**

(71) Applicant: **Mitsubishi Rayon Co., Ltd.**
**Tokyo 100-8253 (JP)**

(72) Inventors:
- **GOTOU, Hisanori**
  **Tokyo 100-8251 (JP)**
- **KOBAYASHI, Takayuki**
  **Tokyo 100-8251 (JP)**

(74) Representative: **Ter Meer Steinmeister & Partner**
**Patentanwälte mbB**
**Nymphenburger Straße 4**
**80335 München (DE)**

# (54) METHOD FOR TREATING ORGANIC WASTE WATER AND COMPOSITION FOR TREATING ORGANIC WASTE WATER

(57) A method for treating organic waste water, wherein after forming flocs by adding a polymeric flocculant to organic waste water in which organic nitrogen waste components to suspended solids (SS) is 6%/SS to 20%/SS, solids are separated from liquid to separate said flocs from said organic waste water.

EP 3 369 712 A1

**Description**

[Technical Field of the Invention]

The present invention relates to a method of treating organic wastewater and a polymer flocculant, and for example, it relates to a treatment method for purifying organic wastewater at low cost and a polymer flocculant to be used in the treatment method. More specifically, the present invention relates to a method of treating organic wastewater by which not only organic substances but also organic nitrogen components in organic wastewater are contained in a flocculated floc as solids and efficiently separated and recovered, BOD, COD, and total nitrogen in treated water are greatly decreased, and thus treated water of high quality is obtained and a polymer flocculant to be used in the method.

[Related Art]

An activated sludge method can be mentioned as a method of treating organic wastewater. The activated sludge method is a method of obtaining treated water of high quality by aerating the activated sludge, decomposing pollutants in the sludge with microorganisms under aerobic conditions, and appropriately controlling the pollutant concentration and the aeration quantity. The activated sludge method is widely utilized in purification treatment of sewage, organic wastewater discharged from factories, and the like.

In the activated sludge method, the effect of removing BOD contained in organic wastewater is high, but on the other hand, the effect of removing nitrogen compounds and phosphorus compounds is low. In addition, the time required for treatment is long, the facility cost is expensive, and a tremendous installation area and tremendous installation space are required.

The burden applied to the treatment facilities by the organic wastewater discharged from livestock farming systems containing a large amount of manure and the organic wastewater discharged from large scale factories sharply fluctuates. Hence, the operating conditions for normally running the treatment facilities are complicated, the maintenance is difficult, and tremendous labor is required. In addition, BOD, COD, and the content of nitrogen compounds in the wastewater are high in most cases of organic wastewater discharged from livestock farming systems, and thus an increase in the operation cost of the treatment facility due to an increase in the treatment time and an increase in volume of the aeration tank has been regarded as a problem.

Meanwhile, the organic wastewater contains highly nutritious components such as proteins as nitrogen compounds and phosphorus compounds. These nutritious components are gaining attention as valuable materials which can be effectively utilized as a feed for livestock or a raw material thereof, an organic fertilizer for plants such as fruit trees and crops, and compost or a raw material thereof.

A method in which these proteins are subjected to flocculation and concentration treatment and recovered as solids is effective in a case in which these proteins are separated and purified from organic wastewater and used. However, most proteins in organic wastewater exhibit low flocculating property, especially soluble proteins dissolved in the liquid phase of wastewater are extremely difficult to be insolubilized, and complicated treatments are thus required.

Patent Documents 1 and 2 describe methods in which a polymer flocculant is added to and mixed with organic wastewater to flocculate the organic substances in the wastewater and the flocculated organic substances are recovered as solids through solid-liquid separation. The object of both Patent Documents 1 and 2 is to improve the reactivity with organic substances and the efficiency of solid-liquid separation by using various kinds of chemicals in combination.

[Citation List]

[Patent Document]

[Patent Document 1] JP 7-178399 A
[Patent Document 2] JP 2013-39539 A

[Summary of the Invention]

[Problems to be Solved by the Invention]

However, the treatment methods described in Patent Documents 1 and 2 both have the following problems.

In other words, tremendous labor and treatment cost are required in order to conduct a complicated pretreatment. In addition, the effect is insufficient for organic wastewater in which the proportion of organic nitrogen components

contained in the suspended solids (hereinafter referred to as "SS") is high, the protein recovering property is low, and furthermore, BOD and COD of organic wastewater do not decrease.

In addition, the conventional method of treating organic wastewater such as the activated sludge method is not a preferred treatment method since it is concerned that the growth of plants and the bodies of livestock are adversely affected when using the recovered solids as a fertilizer and a feed since a large amount of additives such as an inorganic coagulant is used in the pretreatment step.

The present invention has been made in view of such problems, and a main object thereof is to provide a treatment method by which organic nitrogen components and phosphorus compounds are efficiently separated and recovered even from wastewater in which the proportion of organic nitrogen components in SS is high, SS, BOD, and COD of the separated water are decreased, and thus treated water of high quality is obtained.

[Means for Solving the Problems]

Intensive investigations have been carried out in order to solve the above-mentioned problems, and as a result of the present inventors have attained the following findings. In other words, it has been found out that it is possible to efficiently recover the organic nitrogen components and the phosphorus compounds and to decrease SS, BOD, and COD of the treated water by adding and mixing a polymer flocculant with specific organic wastewater to form flocs containing organic nitrogen components such as proteins and phosphorus compounds and then recovering the flocs from the organic wastewater through solid-liquid separation.

Hitherto, there have been no research reports and achievements on the treatment method for flocculating and separating organic nitrogen components in organic wastewater by using a polymer flocculant singly without using an inorganic coagulant. However, the present inventors have found out that it is possible to obtain an excellent recovery effect of organic nitrogen components and phosphorus compounds and treated water of high quality by efficiently incorporating the organic nitrogen components in organic wastewater, particularly soluble proteins into the flocs and, at the same time, favorably flocculating the phosphorus compounds, SS, BOD components, and COD components in the organic wastewater through a flocculation treatment using a polymer flocculant singly, preferably using a specific polymer flocculant and then recovering the flocs through solid-liquid separation.

In other words, the present invention has the following aspects.

A method of treating organic wastewater, which includes forming a floc by adding a polymer flocculant to organic wastewater containing an organic nitrogen component at 6%/SS or more and 20%/SS or less with respect to suspended solids (SS) and separating the floc from the organic wastewater through solid-liquid separation.

A composition for treatment of organic wastewater, which contains a polymer flocculant and is for forming a floc containing an organic nitrogen component by being added to organic wastewater containing an organic nitrogen component at 6%/SS or more and 20%/SS or less with respect to suspended solids (SS) and then separating and recovering the floc and the organic nitrogen component from the organic wastewater through solid-liquid separation.

A composition for treatment of organic wastewater, which contains a polymer flocculant and is for forming a floc containing a phosphorus compound by being added to organic wastewater containing an organic nitrogen component at 6%/SS or more and 20%/SS or less with respect to suspended solids (SS) and a phosphorus compound and then separating and recovering the floc and the phosphorus compound from the organic wastewater through solid-liquid separation.

[Effects of the Invention]

According to the present invention, an effect of obtaining treated water of high quality by efficiently separating and recovering the organic nitrogen components and the phosphorus compounds even from wastewater in which the proportion of organic nitrogen components in SS is high and decreasing SS, BOD, and COD of the separated water is exerted.

[Mode(s) for Carrying out the Invention]

Hereinafter, the present invention will be described in detail.

<Explanation of Terms>

First, several terms in the present specification will be explained.

The term "organic wastewater" means wastewater containing organic substances. For example, organic wastewater is wastewater containing a BOD component, a COD component, an organic nitrogen component, a phosphorus compound, suspended solids other than these, a colloidal substance, an ionic component, and the like.

The term "BOD" means pollution due to water-soluble and water-insoluble organic substances contained in organic wastewater. In the present specification, the value of BOD means a value measured in conformity to the BOD analysis method described in JIS K0102: 21 and 32.3. Accordingly, in the present specification, "BOD" means BODs measured by a method in which a sample is cultured for 5 days. In addition, in the present specification, the components detected as BOD are referred to as "BOD components" for the convenience of explanation.

The term "COD" means pollution due to water-soluble and water-insoluble organic substances contained in organic wastewater, and in the present specification, COD is also used as a substitute value for BOD in some cases. In the present specification, the value of COD means a value measured in conformity to the COD (Mn) analysis method described in JIS K0102: 17. Accordingly, in the present specification, "COD" means $COD_{Mn}$ measured by a method in which potassium permanganate is used as an oxidizing agent. In addition, in the present specification, the components detected as COD are referred to as "COD components" for the convenience of explanation.

The term "organic nitrogen components" means total protein contained in organic wastewater and is classified into SS proteins contained in SS of organic wastewater and soluble proteins dissolved in the liquid phase. Incidentally, the organic wastewater to be treated in the present invention may contain nitrogen components other than the organic nitrogen components. In the present specification, the value of organic nitrogen components specifically means a value measured by the Bradford method.

The term "soluble proteins" means proteins dissolved in the liquid phase of organic wastewater. In the present specification, the value of soluble proteins means a value measured by the Bradford method in which organic wastewater is subjected to centrifugal separation at 3000 rpm for 5 minutes to obtain a supernatant liquid, the proteins in the supernatant liquid are then stained with a dye, Coomassie Brilliant Blue, and the absorbance of the proteins is measured.

The term "phosphorus compounds" means total phosphorus contained in organic wastewater. In the present specification, the value of phosphorus compounds means a value measured inconformity to the potassium peroxodisulfate decomposition method and molybdenum blue absorption spectrophotometry described in JIS K0102: 46.3.1 and JIS K0102: 46.1.1.

The term "ionic components" means anionic or amphoteric organic polymer components contained in organic wastewater and anionic components derived from inorganic salts.

The term "colloid value" means the amount of electric charge contained in organic wastewater or the supernatant liquid of organic wastewater. In addition, the amount of electric charge here is derived from a BOD component, a COD component, an organic nitrogen component, a phosphorus compound, suspended solids other than these, a colloidal substance, an ionic component, and the like contained in organic wastewater. The colloid value (supernatant) (meq/L) means the amount of electric charge contained in the supernatant liquid obtained by subjecting organic wastewater to centrifugal separation at 3000 rpm for 5 minutes, and the colloid value (total) (meq/L) means the amount of electric charge contained in organic wastewater.

Specifically, the value of colloid value (supernatant) means a value measured according to the following procedure.

(1) Organic wastewater is taken into a centrifuge tube by 100 mL.
(2) The organic wastewater is subjected to centrifugal separation at 3000 rpm for 5 minutes for solid-liquid separation, and the liquid phase portion is collected as a supernatant liquid.
(3) The supernatant liquid is taken into a 200 mL tall beaker by 10 mL, and 90 mL of pure water is added thereto.
(4) A 1/200 N solution of methyl glycol chitosan is further added thereto by 2 mL, and the mixture is stirred.
(5) Toluidine blue as an indicator is further added to the mixture by 1 to 2 drops.
(6) Titration is conducted using a 1/400 N aqueous solution of potassium polyvinyl sulfate while stirring the mixture at 500 rpm, and a titre value X (mL) at which the color of the liquid changes from blue to pink is measured.
(7) The blank titre value Y (mL) is measured by titrating 100 mL of pure water by conducting the works (2) and (3) in the same manner.
(8) The colloid value (meq/L) is determined by the following formula.

[Math. 1]

$$\text{Colloid value (supernatant)} = \frac{(\text{Titre value X - Titre value Y})}{10} \times \frac{1}{400} \times 1000\ (\text{meq L})$$

Specifically, the value of colloid value (total) means a value measured according to the following procedure.

(1) Organic wastewater is taken into a 200 mL glass beaker by 10 mL, and 90 mL of pure water is added thereto.

(2) A 1/200 N solution of methyl glycol chitosan is added thereto by 10 mL, and the mixture is stirred.
(3) The mixture is stirred at 500 rpm for 10 minutes by using a magnetic stirrer.
(4) The mixture is transferred to a centrifuge tube and subjected to centrifugal separation at 3000 rpm for 10 minutes for solid-liquid separation, and the liquid phase portion is collected into a 200 mL tall beaker by 60 mL.
(5) Toluidine blue as an indicator is added to the liquid phase portion by 1 to 2 drops.
(6) Titration is conducted using a 1/400 N aqueous solution of potassium polyvinyl sulfate while stirring the liquid phase portion at 500 rpm, and a titre value W (mL) at which the color of the liquid changes from blue to pink is measured.
(7) The blank titre value Z (mL) is measured by titrating 100 mL of pure water by conducting the works (2) to (6).
(8) The colloid value (meq/L) is determined by the following formula.

[Math. 2]

$$\text{Colloid value (total)} = \frac{(\text{Titre value W} - \text{Titre value Z})}{2} \quad (\text{meq L})$$

The term "SS" means suspended solids in organic wastewater.
In the present specification, the value of SS specifically means a value measured according to the following procedure.

(1) Organic wastewater is taken into a centrifuge tube by 50 mL.
(2) The organic wastewater is subjected to centrifugal separation at 3000 rpm for 10 minutes, and the precipitate is collected.
(3) The precipitate is dried as it is at 105°C for 6 hours, and the residual amount (precipitated solid amount C) (g) is weighed.
(4) SS (%) are determined by the following formula.

[Math. 3]

$$SS = \frac{\text{Total solid amountC}}{50} \times 100 \quad (\%)$$

The term "TS" means total solids in organic wastewater.
In the present specification, the value of TS specifically means a value measured according to the following procedure.

(1) Organic wastewater is dried by 50 g at 105°C for 6 hours, and the residual amount (total solid amount D) (g) is weighed.
(2) TS (%) are determined by the following formula.

[Math. 4]

$$TS = \frac{\text{Total solid amountD}}{50} \times 100 \quad (\%)$$

The term "SVI 3000" means a specific volume of the precipitate obtained by subjecting organic wastewater to centrifugal separation at 3000 rpm for 5 minutes. Specifically, the value of SVI 3000 in the present specification means a value measured according to the following procedure.

(1) Organic wastewater is taken into a centrifuge tube by 100 mL.
(2) The organic wastewater is subjected to centrifugal separation at 3000 rpm for 5 minutes for solid-liquid separation and separated into a liquid phase portion and a precipitate.

(3) The volume E (mL) of the liquid phase portion is measured.
(4) The whole amount of the precipitate is dried as it is at 105°C for 6 hours, and the residual amount (precipitated solid amount F) (g) is weighed.
(5) SVI 3000 (mL/g) is determined by the following formula.

[Math. 5]

$$\mathrm{SVI3000} = \frac{100 - \text{Volume E}}{\text{Precipitated solid amount F}} \quad (\mathrm{mL/g})$$

The term "colloid ratio" means the ratio of colloid value (supernatant) to colloid value (total) in organic wastewater. Specifically, the value of the colloid ratio in the present specification is determined by the following formula.

[Math. 6]

$$\text{Colloid ratio} = \frac{\text{Colloid value (supernatant) (meq/L)}}{\text{Colloid Value (total) (meq/L)}} \times \frac{\mathrm{TS}(\%)}{\mathrm{TS}(\%) - \mathrm{SS}(\%)} \times \mathrm{SVI3000}\ (\mathrm{mL/g})$$

The term "constitutional unit" means a structural unit derived from a monomer molecule formed by polymerizing a monomer or a structural unit composed of structural units which are derived from two or more monomer molecules and in which pendant groups are linked to each other by a reaction between a pendant group of a structural unit derived from a monomer molecule and a pendant group of a structural unit derived from another monomer molecule.
The term "flocculant" means a chemical having a function to flocculate water-soluble and water-insoluble pollutants, suspended solids, a colloidal substance, an ionic component, and the like contained in organic wastewater and to form flocs. The floc can be, for example, a fine floc or a flocculated floc. In addition, in the present specification, the term "polymer flocculant" means a flocculant which is a macromolecular compound among the flocs.
The term "polymer" means a macromolecular compound having a structure composed of one kind or plural kinds of constitutional units.
The term "flocculation treatment" means to obtain separated water and a floc which is a separated solid fraction by flocculating a BOD component, a COD component, an organic nitrogen component, a phosphorus compound, suspended substances other than these, a colloidal substance, an ionic component, and the like to form a floc and then conducting solid-liquid separation.
The term "treated water" means a liquid fraction obtained by separating flocs through solid-liquid separation in the flocculation treatment of organic wastewater.

<Method of Treating Organic Wastewater>

The method of treating organic wastewater according to the present invention is a method in which a floc is formed by adding a polymer flocculant to organic wastewater containing an organic nitrogen component at 6%/SS or more and 20%/SS or less with respect to suspended solids (SS) and the floc is separated from the organic wastewater through solid-liquid separation.
It is possible to efficiently separate and recover the organic nitrogen components and the phosphorus compounds even from wastewater in which the proportion of organic nitrogen components in SS is high, that is, the content of organic nitrogen components is 6%/SS or more and 20%/SS or less by using a polymer flocculant. In addition, it is also possible to favorably decrease SS, BOD, and COD of the treated water as compared to the organic wastewater before the treatment. In addition, the treatment can be easily conducted since it is only required to mix the polymer flocculant with the organic wastewater and to conduct solid-liquid separation.

[Organic Wastewater]

The organic wastewater targeted by the method of treating organic wastewater according to the present invention may be any wastewater containing organic substances as described above. Specific examples thereof may include livestock manure wastewater generated from livestock production facilities and digested liquid obtained by subjecting wastewater containing manure to the methane fermentation treatment. Examples thereof may also include wastewater

such as domestic wastewater and sewage containing excreta, wastewater generated from drink factories and food factories, wastewater generated from chemical factories of dyeing, resins, fibers, chemical products, and the like, and wastewater generated from various factory facilities other than those exemplified here.

The organic substances contained in the organic wastewater targeted by the method of treating organic wastewater according to the present invention may be either water-soluble or water-insoluble organic substances or a mixture thereof. As an index of the content of organic substances, the values of COD and total protein content can be used.

The range of COD of the organic wastewater targeted by the method of treating organic wastewater according to the present invention is preferably 4000 mg/L or more, more preferably 7000 mg/L or more, and still more preferably 10000 mg/L or more. A favorable effect of recovering organic nitrogen and a favorable effect of decreasing the burden to the environment due to BOD and COD can be obtained in the flocculation treatment when COD of the organic wastewater is within the above range. Consequently, it is possible to obtain treated water of high quality by the method of treating organic wastewater according to the present invention.

The range of SS in the organic wastewater targeted by the method of treating organic wastewater according to the present invention is preferably 50 mg/L or more, more preferably 500 mg/L or more, and still more preferably 1000 mg/L or more. In addition, the range of SS is preferably 100000 mg/L or less, more preferably 50000 mg/L or less, and still more preferably 30000 mg/L or less. Flocculated flocs containing organic nitrogen components and phosphorus compounds are favorably formed and an excellent effect of recovering organic nitrogen components and phosphorus compounds can be obtained in the flocculation treatment of organic wastewater when SS in the organic wastewater are within the above range.

The range of TS in the organic wastewater targeted by the method of treating organic wastewater according to the present invention is preferably 100 mg/L or more, more preferably 1000 mg/L or more, and still more preferably 2000 mg/L or more. In addition, the range of SS is preferably 100000 mg/L or less, more preferably 50000 mg/L or less, and still more preferably 30000 mg/L or less. Flocculated flocs containing organic nitrogen components and phosphorus compounds are favorably formed and an excellent effect of recovering organic nitrogen components and phosphorus compounds can be obtained in the flocculation treatment of organic wastewater when TS in the organic wastewater are within the above range.

The range of organic nitrogen components with respect to SS in the organic wastewater targeted by the method of treating organic wastewater according to the present invention may be 6%/SS or more. In addition, the range is more preferably 8%/SS or more and still more preferably 10%/SS or more. In addition, the range of organic nitrogen components with respect to SS may be 20%/SS or less, but it is more preferably 18%/SS or less and still more preferably 16%/SS or less. Flocculated flocs containing organic nitrogen components and phosphorus compounds are favorably formed and an excellent effect of recovering organic nitrogen components and phosphorus compounds can be obtained in the flocculation treatment of organic wastewater when the organic nitrogen components with respect to SS in the organic wastewater are within the above range.

The range of organic nitrogen components in the organic wastewater targeted by the method of treating organic wastewater according to the present invention may be 800 mg/L or more. In addition, the range is more preferably 1000 mg/L or more and still more preferably 1200 mg/L or more. In addition, the range of organic nitrogen components may be 10000 mg/L or less, but it is more preferably 8000 mg/L or less and still more preferably 6000 mg/L or less. Flocculated flocs containing organic nitrogen components and phosphorus compounds are favorably formed and an excellent effect of recovering organic nitrogen components and phosphorus compounds can be obtained in the flocculation treatment of organic wastewater when the organic nitrogen components in the organic wastewater are within the above range.

The range of phosphorus compounds in the organic wastewater targeted by the method of treating organic wastewater according to the present invention may be 100 mg/L or more. In addition, the range is more preferably 300 mg/L or more and still more preferably 600 mg/L or more. In addition, the range of phosphorus compounds may be 7000 mg/L or less, preferably 5000 mg/L or less, and more preferably 3000 mg/L or less. Flocculated flocs containing organic nitrogen components and phosphorus compounds are favorably formed and an excellent effect of recovering organic nitrogen components and phosphorus compounds can be obtained in the flocculation treatment of organic wastewater when the phosphorus compounds in the organic wastewater are within the above range.

The range of colloid ratio in the supernatant liquid of the organic wastewater targeted by the method of treating organic wastewater according to the present invention is preferably 5.0 or more, more preferably 8.0 or more, still more preferably 10.0 or more, and particularly preferably 15.0 or more. The range of colloid value of the supernatant liquid may be 60.0 or less. In addition, it is more preferably 50.0 or less and still more preferably 40.0 or less. Flocculated flocs containing organic nitrogen components and phosphorus compounds are favorably formed and an excellent effect of recovering organic nitrogen components and phosphorus compounds can be obtained in the flocculation treatment of organic wastewater when the range of colloid ratio in the organic wastewater is within the above range.

As described above, organic nitrogen components and phosphorus compounds are excellently separated and recovered by the method of treating organic wastewater according to the present invention, thus those containing organic nitrogen components and phosphorus compounds can be suitably used as the organic wastewater, and as a result,

flocs to be obtained contain the organic nitrogen components and the phosphorus compounds.

[Polymer Flocculant (X)]

The polymer flocculant to be used in the method of treating organic wastewater according to the present invention is not particularly limited, but it may be a polymer flocculant (X) composed of at least one or more kinds of polymer flocculants, and those having a cationic constitutional unit and a nonionic constitutional unit can be more suitably used as the polymer flocculant (X).

(Constitutional Unit)

The content range of a cationic constitutional unit is preferably 10 mol% or more and more preferably 15 mol% or more with respect to the sum of all the constitutional units of the respective polymer flocculants constituting the polymer flocculant (X). In addition, the content range is preferably 60 mol% or less and more preferably 40 mol% or less. The content range of a nonionic constitutional unit is more preferably 1 mol% or more with respect to the sum of all the constitutional units of the respective polymer flocculants constituting the polymer flocculant (X). In addition, it is preferably 99 mol% or less.

The supernatant liquid of the organic wastewater targeted by the method of treating organic wastewater according to the present invention contains a BOD component, a COD component, an organic nitrogen component, a phosphorus compound, suspended substances other than these, a colloidal substance, and a component having a negative charge (hereinafter referred to as a "negatively charged component") such as an ionic component in large amounts. In the flocculated floc forming process in the method of treating organic wastewater according to the present invention, the cationic constitutional unit of the polymer flocculant reacts with the negative charge to form a highly viscous insoluble substance as a fine floc, but thereafter, the fine flocs flocculate and grow into coarse flocculated flocs. It is considered that the organic nitrogen components are incorporated into the flocculated flocs when the fine flocs grow into coarse flocculated flocs. Furthermore, it is considered that the reaction to form this fine floc proceeds after the polymer flocculant and the organic wastewater are uniformly mixed. In the case of the polymer flocculant (X) having the cationic constitutional unit within the above range, the cationic constitutional unit of the polymer flocculant reacts with the negatively charged component in the organic wastewater to form fine flocs after the organic wastewater and the polymer flocculant are uniformly mixed and thus flocculated flocs containing organic nitrogen components and phosphorus compounds are favorably formed in the flocculation treatment of the organic wastewater. Hence, it is possible to obtain a favorable effect of recovering organic nitrogen components and phosphorus compounds and a favorable effect of decreasing the burden to the environment due to BOD and COD. Consequently, it is possible to obtain treated water of high quality by the method of treating organic wastewater according to the present invention.

[Nonamidine-based Cationic Polymer (A), Nonamidine-based Cationic Polymer (AH), and Nonamidine-based Cationic Polymer (AL)]

The polymer flocculant (X) includes a nonamidine-based cationic polymer (A) having a specific structure, a nonamidine-based cationic polymer (AH), and a nonamidine-based cationic polymer (AL). In addition, the nonamidine-based cationic polymer (A), the nonamidine-based cationic polymer (AH), and the nonamidine-based cationic polymer (AL) have a cationic constitutional unit and a nonionic constitutional unit.

(Cationic Constitutional Unit)

The cationic constitutional unit of the nonamidine-based cationic polymer (A), the nonamidine-based cationic polymer (AH), and nonamidine-based cationic polymer (AL) is a constitutional unit represented by the following general formula (1).

[Chem. 1]

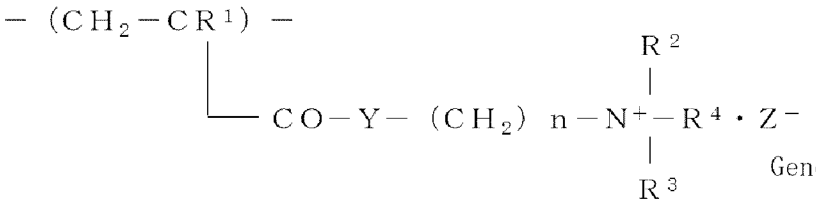

General formula (1)

(In the general formula (1), $R^1$ represents a hydrogen atom or a methyl group, $R^2$ and $R^3$ each independently represent any one of a hydrogen atom or an alkyl group having from 1 to 4 carbon atoms, $R^4$ represents an alkyl group having from 1 to 4 carbon atoms or a benzyl group, Y represents an oxygen atom or NH, $Z^-$ represents an anion, and n represents an integer from 1 to 3.)

Specific examples of the cationic constitutional unit represented by the general formula (1) may include an amine salt of a dialkylaminoalkyl (meth)acrylate which is a cationic monomer, a cationic constitutional unit derived from a quaternary alkyl chloride salt, and a cationic constitutional unit derived from an amine salt or a quaternary alkyl chloride salt of a dialkylaminoalkyl (meth)acrylamide. Among these, a dialkylaminoalkyl (meth)acrylate quaternary alkyl chloride salt is preferable since it has high flocculation performance. As the monomer for constituting the cationic constitutional unit, one kind of cationic monomer may be used singly or two or more kinds thereof may be concurrently used.

The content range of the cationic constitutional unit in the nonamidine-based cationic polymer (A) is preferably 10 mol% or more and more preferably 30 mol% or more. In addition, it is preferably 80 mol% or less and more preferably 60 mol% or less.

The content range of the cationic constitutional unit in the nonamidine-based cationic polymer (AH) is 80 mol% or more and more preferably 85 mol% or more. In addition, it is 100 mol% or less.

The content range of the cationic constitutional unit in the nonamidine-based cationic polymer (AL) is 1 mol% or more and more preferably 4 mol% or more. In addition, it is 10 mol% or less and more preferably 8 mol% or less.

The polymer flocculant (X) to be used in the method of treating organic wastewater according to the present invention may be a mixture of the nonamidine-based cationic polymer (AH) and the nonamidine-based cationic polymer (AL). In the case of using a mixture as well, the content range of the cationic constitutional unit in the mixture is preferably 10 mol% or more and more preferably 30 mol% or more. In addition, it is preferably 80 mol% or less and more preferably 60 mol% or less.

It is possible to exert favorable flocculation performance by setting the total amount of the cationic constitutional units as described above when plural kinds of nonamidine-based cationic polymers (A) are used in mixture such as a mixture of the nonamidine-based cationic polymer (AH) and the nonamidine-based cationic polymer (AL) or only one kind of nonamidine-based cationic polymer (A) is used.

(Nonionic Constitutional Unit)

The nonamidine-based cationic polymer (A), the nonamidine-based cationic polymer (AH), and the nonamidine-based cationic polymer (AL) contain a nonionic constitutional unit. Examples of the nonionic constitutional unit may include a constitutional unit derived from those of which the monomer is (meth)acrylamide. The content of the nonionic constitutional unit in the nonamidine-based cationic polymer (A) is preferably 1 mol% or more. In addition, it is preferably 99 mol% or less.

(Reduced Viscosity)

The range of reduced viscosity of the nonamidine-based cationic polymer (A), the nonamidine-based cationic polymer (AH), and the nonamidine-based cationic polymer (AL) is preferably 7.0 dL/g or more, more preferably 9.0 dL/g or more, and still more preferably 11.0 dL/g or more. In addition, it is preferably 20.0 dL/g or less, more preferably 17.0 dL/g or less, and still more preferably 15.0 dL/g or less.

(Method of Producing Nonamidine-Based Cationic Polymer)

The method of producing the nonamidine-based cationic polymer (A), the nonamidine-based cationic polymer (AH), and the nonamidine-based cationic polymer (AL) is not particularly limited, but it is possible to appropriately select a method such as an aqueous solution photopolymerization method, an adiabatic polymerization method, a dispersion polymerization method, or an emulsion polymerization method. In the aqueous photopolymerization method, for example, an aqueous monomer solution in which monomers for constituting the constitutional units are dissolved in water may be formed into a uniform sheet and polymerized using a photoinitiator by being irradiated with visible light or ultraviolet

light. In the adiabatic polymerization method, for example, the polymerization is conducted by adding one or more kinds of initiators to an aqueous monomer solution to obtain a polymer in the form of an aqueous gel. In the dispersion polymerization method, for example, polymerization may be conducted by dispersing an aqueous monomer solution in a nonaqueous solvent. In the emulsion polymerization method, an aqueous monomer solution may be emulsified in a nonaqueous solvent using an emulsifier and polymerized. In the case of photopolymerization, adiabatic polymerization, and the like, the polymer is obtained as an aqueous gel and it is thus more preferable to pulverize and dry the aqueous gel into a powder.

In addition, the method of producing the nonamidine-based cationic polymer (A), the nonamidine-based cationic polymer (AH), and the nonamidine-based cationic polymer (AL) having the reduced viscosity described above is not particularly limited, and conditions such as polymerization time, polymerization temperature, and amount of chain transfer agent added in the production process may be appropriately selected in consideration of the viscosity of the polymer to be produced. In addition, it is preferable to adjust the reduced viscosity by the amount of chain transfer agent added. The kind of chain transfer agent is not particularly limited, but examples thereof may include thiol compounds such as mercaptoethanol and mercaptopropionic acid and reducing inorganic salts such as sodium sulfite, sodium hydrogen sulfite, and sodium hypophosphite. Among these, sodium hypophosphite is particularly preferable. The amount of chain transfer agent added is preferably 1 ppm or more and 3000 ppm or less with respect to the total monomers of the raw materials.

[Amidine-based Cationic Polymer (B)]

It is preferable that the polymer flocculant further contains a specific amidine-based cationic polymer (B). The amidine-based cationic polymer (B) has a high cation density and efficiently reacts with organic nitrogen components, particularly soluble proteins in organic wastewater to insolubilize these. It is thus possible to form flocculated flocs containing a large amount of organic nitrogen components. In addition, flocculating property of BOD and COD is also improved and it is thus possible to obtain treated water of higher quality.

The amidine-based cationic polymer (B) has at least one among the amidine constitutional units represented by the following general formula (2) and the following general formula (3).

[Chem. 2]

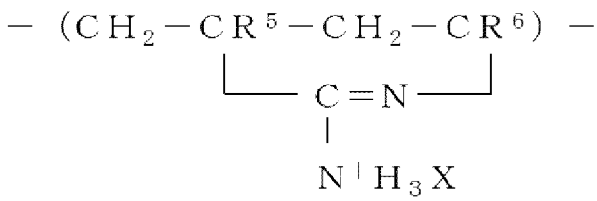

General formula (2)

[Chem. 3]

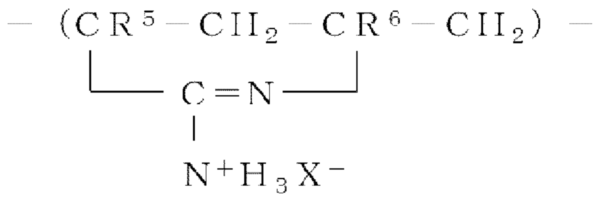

General formula (3)

(In the general formulas (2) and (3), each of $R^5$ and $R^6$ independently represent a hydrogen atom or a methyl group and $X^-$ represents an anion.)

The content range of the amidine constitutional unit in the amidine-based cationic polymer (B) is preferably 30 mol% or more and more preferably 40 mol% or more. In addition, it is preferably 90 mol% or less and more preferably 80 mol% or less. It is possible to efficiently insolubilize organic nitrogen components, particularly soluble proteins and to form flocculated flocs containing a large amount of organic nitrogen components in the flocculation treatment of organic wastewater when the content range is within the above range.

(Method of Producing Amidine-based Cationic Polymer)

The method of producing the amidine-based cationic polymer (B) is not particularly limited, but a method in which a copolymer of an ethylenically unsaturated monomer having an amino group or a substituted amino group capable of forming an amino group by a conversion reaction with a nitrile such as acrylonitrile or methacrylonitrile is produced and the cyano group and amino group in the copolymer are reacted with each other under an acidic condition to form an amidine.
As the ethylenically unsaturated monomer, a compound represented by the following general formula (4) is preferable.

$CH_2$=$CR^7$-$NHCOR^8$ General formula (4)

(In the formula, $R^7$ represents a hydrogen atom or a methyl group and $R^8$ represents a hydrogen atom or an alkyl group having from 1 to 4 carbon atoms.)
The copolymer is easily converted to an amino group through hydrolysis or alcoholysis. Furthermore, this amino group reacts with the adjacent cyano group to form an amidine. Specific examples of the compound represented by the general formula (4) may include N-vinylformamide ($R^7$ = H and $R^8$ = H) and N-vinylacetamide ($R^7$ = H and $R^8$ = $CH_3$).
The used proportion of the ethylenically unsaturated monomer to the nitrile in the copolymer is preferably from 20 : 80 to 80 : 20 and more preferably from 40 : 60 to 60 : 40 in terms of molar ratio.
The most typical method of producing the amidine-based cationic polymer (B) will be described. First, according to the above description, N-vinylformamide is copolymerized with acrylonitrile. Next, an amidine constitutional unit is formed from the amino group formed by heating and hydrolyzing the copolymer thus formed in the presence of hydrochloric acid and the adjacent cyano group, thereby producing the amidine-based cationic polymer (B). In this case, it is possible to obtain an amidine-based cationic polymer (B) having various compositions by appropriately selecting the molar ratio between N-vinylformamide and acrylonitrile to be subjected to copolymerization and the conditions for forming an amidine from the copolymer. Incidentally, the amidine-based cationic polymer (B) may be selected and used from commercially available products which are easy to obtain.
The reduced viscosity of the amidine-based cationic polymer (B) is preferably 0.1 dL/g or more and more preferably 1 dL/g or more. In addition, it is preferably 10 dL/g or less and more preferably 5 dL/g or less.

[Other Polymers]

The polymer flocculant to be used in the method of treating organic wastewater according to the present invention may contain a nonamidine-based cationic polymer and an amphoteric polymer other than the nonamidine-based cationic polymer (A), the nonamidine-based cationic polymer (AH), the nonamidine-based cationic polymer (AL), and the amidine-based cationic polymer (B) to the extent to which the effect of the present invention is not impaired. The mixing ratio of the other cationic polymer and amphoteric polymer is preferably less than 10 mass%, more preferably less than 5 mass%, and still more preferably 0 mass% with respect to the total mass of the polymer flocculant.

[Method of Forming Floc]

As a method of adding the polymer flocculant to organic wastewater and a method of forming flocs, known methods can be applied.
As a method of adding the polymer flocculant, for example, it is preferable to dissolve the polymer flocculant in water at a concentration of 0.05 mass% or more and 0.5 mass% or less and then to add the aqueous solution to organic wastewater. In addition, it is more preferable to add the polymer flocculant as a one-dosage form chemical in which the respective polymers are mixed in a case in which the polymer flocculant is composed of two or more kinds of polymers among the nonamidine-based cationic polymer (A), the nonamidine-based cationic polymer (AH), the nonamidine-based cationic polymer (AL), and the amidine-based cationic polymer (B). In addition, the polymer flocculant in the form of a powder may be added to the organic wastewater as it is.
In the method for flocculation treatment of organic wastewater of the present invention, a polymer flocculant composed of a nonamidine-based cationic polymer, an amphoteric polymer, and an anionic polymer other than the nonamidine-based cationic polymer (A) and the nonamidine-based cationic polymer (AH), the nonamidine-based cationic polymer (AL), and the amidine-based cationic polymer (B) may be added after the polymer flocculant is added to the organic wastewater if necessary in order to form more favorable flocculated flocs.
It is preferable that the addition of the polymer flocculant is conducted while stirring the organic wastewater or stirring is conducted after the addition. The number of revolutions in the stirring conducted while adding the polymer flocculant and the number of revolutions in the stirring conducted after adding the polymer flocculant are preferably 180

rpm or more and more preferably 3000 rpm or less. The polymer flocculant is more uniformly mixed as the number of revolutions is 180 rpm or more. The stirring force is not too strong and thus the fine flocs favorably grow into a flocculated floc as the number of revolutions is 3000 rpm or less.

In addition, an acidic substance may be added when adding the polymer flocculant. The addition of an acidic substance improves the solubility of the polymer flocculant in water. In addition, it is possible to prevent degradation of the polymer flocculant due to a decrease in the viscosity of the aqueous solution of polymer flocculant when an acidic substance is added to the aqueous solution of polymer flocculant. The addition of an acidic substance may be conducted at an arbitrary time, namely before, during, or after the addition of the polymer flocculant to the organic wastewater. In addition, the acidic substance may be added to the aqueous solution of polymer flocculant before being added to the organic wastewater. Examples of the acidic substance may include sulfamic acid and acidic sodium hydrogen sulfite.

[Solid-Liquid Separation]

The method of separating flocs from organic wastewater through solid-liquid separation is not particularly limited, and examples thereof may include methods such as flocculating setting, flotation separation, centrifugal separation, and filtration.

In addition, the flocs separated from the organic wastewater through solid-liquid separation may be dehydrated by using a dehydrating apparatus. Examples of the dehydrating apparatus which can be used for dehydration may include a press dehydrator, a centrifugal dehydrator, a screw press dehydrator, a multiple disc dehydrator, a rotary press filter, and a vacuum dehydrator.

The amount of the polymer flocculant added may be appropriately set depending on the concentrations of SS, an organic nitrogen component, a phosphorus compound, BOD and COD, suspended solids, a colloidal substance, an ionic component, and the like in the organic wastewater, but as an approximate standard, for example, it is an amount to be 1 ppm or more in the organic wastewater and an amount to be 3000 ppm or less in the organic wastewater.

In addition, a coagulant may be concurrently used with the polymer flocculant. Examples of the coagulant may include an inorganic coagulant and an organic coagulant. The coagulant to be concurrently used may be one kind or plural kinds. The polymer flocculant can sufficiently exert the effect of decreasing SS, BOD, and COD even when being concurrently used with a coagulant.

Examples of the inorganic coagulant may include aluminum sulfate, polyaluminum chloride, ferric chloride, ferrous sulfate, ferric sulfate, and poly iron (poly iron sulfate, poly iron chloride).

Examples of the organic coagulant may include polyamine, polydiallyldimethylammonium chloride, a quaternary alkyl chloride salt of polydialkylaminoalkyl methacrylate, and a cationic surfactant.

The time for addition of the coagulant is not particularly limited, but it is preferable to add the coagulant to the organic wastewater before the polymer flocculant is added to the organic wastewater. The amount of coagulant added is preferably 5 parts by mass or more and 3000 parts by mass or less with respect to 100 parts by mass of the polymer flocculant to be added to the organic wastewater.

In the method of treating organic wastewater of the present invention, the recovery rate represented by the weight ratio of the amount of the organic nitrogen components contained in the separated flocs to the organic nitrogen components contained in the organic wastewater is preferably 70% or more and more preferably 80% or more. In addition, the weight ratio is preferably 100% or less. According to the method described above, it is possible to realize a recovery rate of organic nitrogen components as high as 70% or more. The quality of treated water is further improved by such a high recovery rate.

In the method of treating organic wastewater of the present invention, the ratio of the organic nitrogen components contained in the treated water obtained through the solid-liquid separation of the organic wastewater to the organic nitrogen components contained in the supernatant liquid obtained by subjecting the organic wastewater to centrifugal separation at 3000 rpm for 5 minutes is preferably 0% or more and more preferably 5% or more. In addition, it is preferably 70% or less, more preferably 50% or less, and still more preferably 30% or less. According to the method described above, it is possible to remove the organic nitrogen components at such a high removal rate.

In addition, the method of treating organic wastewater according to the present invention can be suitably utilized for organic wastewater containing a phosphorus compound. The floc is a floc containing a phosphorus compound in a case in which the organic wastewater contains a phosphorus compound. In the method for flocculation treatment of organic wastewater of the present invention, the recovery rate represented by the weight ratio of the amount of the phosphorus compounds contained in the separated flocs to the phosphorus compounds contained in the organic wastewater is preferably 50% or more and more preferably 70% or more. In addition, it is preferably 100% or less. According to the method described above, it is possible to realize a recovery rate of phosphorus compounds as high as 50% or more. The quality of treated water is further improved by such a high recovery rate.

In addition, the present invention provides a new application of a polymer flocculant, and a composition for treatment of organic wastewater which contains a polymer flocculant and is for forming a floc containing an organic

nitrogen component by being added to organic wastewater containing an organic nitrogen component at 6%/SS or more and 20%/SS or less with respect to suspended solids (SS) and then separating and recovering the floc and the organic nitrogen component from the organic wastewater through solid-liquid separation is also within the scope of the present invention. In addition, a composition for treatment of organic wastewater, which contains a polymer flocculant and is for forming a floc containing a phosphorus compound by being added to organic wastewater containing an organic nitrogen component at 6%/SS or more and 20%/SS or less with respect to suspended solids (SS) and a phosphorus compound and then separating and recovering the floc and the phosphorus compound from the organic wastewater through solid-liquid separation is also within the scope of the present invention.

The present invention is not limited to the embodiments described above, and various modifications are possible within the scope indicated in the claims, and embodiments obtained by appropriately combining technical means respectively disclosed in the embodiments are also included in the technical scope of the present invention.

[Additional Matters]

As described above, in the method of treating organic wastewater according to the present invention, it is more preferable that the organic wastewater contains an organic nitrogen component and the floc is a floc containing an organic nitrogen component.

In addition, in the method of treating organic wastewater according to the present invention, it is more preferable that the polymer flocculant is a polymer flocculant (X). The content range of the cationic constitutional unit is preferably 10 mol% or more with respect to the sum of all the constitutional units of the respective polymer flocculants constituting the polymer flocculant (X). In addition, it is preferably 60 mol% or less.

In addition, in the method of treating organic wastewater according to the present invention, it is preferable that the polymer flocculant (X) is a nonamidine-based cationic polymer (A), a nonamidine-based cationic polymer (AH), and a nonamidine-based cationic polymer (AL) which have a cationic constitutional unit represented by the general formula (1) and a nonionic constitutional unit.

In addition, in the method of treating organic wastewater according to the present invention, it is preferable that the nonamidine-based cationic polymer (AH) contains a cationic constitutional unit at 80 mol% or more and 100 mol% or less with respect to all the constitutional units. In addition, it is preferable that the nonamidine-based cationic polymer (AL) contains a cationic constitutional unit at 1 mol% or more and 10 mole% or less with respect to all the constitutional units.

In addition, in the method of treating organic wastewater according to the present invention, it is preferable that the polymer flocculant (X) further includes an amidine-based cationic polymer (B), and the amidine-based cationic polymer (B) has at least one among the amidine constitutional units represented by the general formula (2) and the general formula (3).

An aspect of the present invention is listed as follows.

[1] A method of treating organic wastewater, the method including forming a floc by adding a polymer flocculant to organic wastewater containing an organic nitrogen component at 6%/SS or more and 20%/SS or less with respect to suspended solids (SS) and separating the floc from the organic wastewater through solid-liquid separation.

[2] The method of treating organic wastewater according to [1], in which the floc is a floc containing an organic nitrogen component.

[3] The method of treating organic wastewater according to [2], in which a recovery rate denoted by a weight ratio of an amount of an organic nitrogen component contained in the separated floc to an organic nitrogen component contained in the organic wastewater is 70% or more and 100% or less.

[4] The method of treating organic wastewater according to [2] or [3], in which a ratio of an organic nitrogen component contained in treated water obtained through the solid-liquid separation to an organic nitrogen component contained in a supernatant liquid obtained by subjecting the organic wastewater to centrifugal separation at 3000 rpm for 5 minutes is 0% or more and 70% or less.

[5] The method of treating organic wastewater according to any one of [1] to [4], in which the organic wastewater contains a phosphorus compound and the floc is a floc containing a phosphorus compound.

[6] The method of treating organic wastewater according to [5], in which a recovery rate denoted by a weight ratio of an amount of a phosphorus compound contained in the separated floc to a phosphorus compound contained in the organic wastewater is 50% or more and 100% or less.

[7] The method of treating organic wastewater according to any one of [1] to [6], in which the polymer flocculant is a polymer flocculant (X) including at least one or more kinds of polymer flocculants, and the polymer flocculant (X) contains a cationic constitutional unit at 10 mol% or more and 60 mol% or less with respect to a sum of all constitutional units of respective polymer flocculants constituting the polymer flocculant (X).

[8] The method of treating organic wastewater according to [7], in which the polymer flocculant (X) is a nonamidine-based cationic polymer (A) having a cationic constitutional unit represented by the following general formula (1).

[Chem. 4]

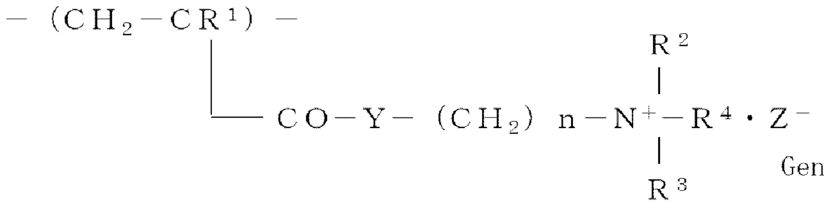

General formula (1)

(In the general formula (1), $R^1$ represents a hydrogen atom or a methyl group, $R^2$ and $R^3$ each independently represent any one of a hydrogen atom or an alkyl group having from 1 to 4 carbon atoms, $R^4$ represents an alkyl group having from 1 to 4 carbon atoms or a benzyl group, Y represents an oxygen atom or NH, $Z^-$ represents an anion, and n represents an integer from 1 to 3.)

[9] The method of treating organic wastewater according to [8], in which the polymer flocculant (X) includes a mixture of a nonamidine-based cationic polymer (AH) containing a cationic constitutional unit represented by the general formula (1) at 80 mol% or more and 100 mol% or less with respect to all constitutional units of a polymer flocculant and a nonamidine-based cationic polymer (AL) containing a cationic constitutional unit represented by the general formula (1) at 1 mol% or more and 10 mole% or less with respect to all constitutional units of a polymer flocculant.

[10] The method of treating organic wastewater according to any one of [1] to [9], in which the polymer flocculant (X) further includes an amidine-based cationic polymer (B), and the amidine-based cationic polymer (B) has at least one among amidine constitutional units represented by the following general formula (2) and the following general formula (3).

[Chem. 5]

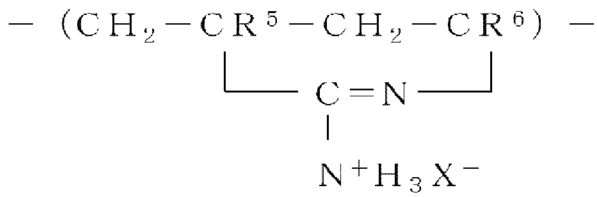

General formula (2)

[Chem. 6]

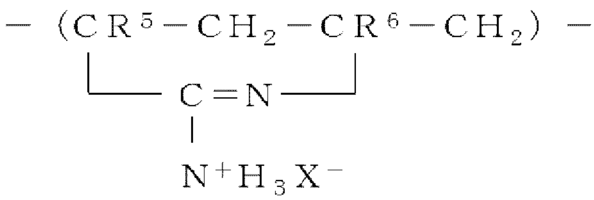

General formula (3)

(In the general formulas (2) and (3), each of $R^5$ and $R^6$ independently represent a hydrogen atom or a methyl group and $X^-$ represents an anion.)

[11] The method of treating organic wastewater according to any one of [1] to [10], in which an organic nitrogen component in the organic wastewater is 800 mg/L or more and 10000 mg/L or less.

[12] The method of treating organic wastewater according to any one of [1] to [11], in which a colloid ratio in the organic wastewater determined by the following formula is 5.0 or more.

[Math. 7]

$$\text{Colloid ratio} = \frac{\text{Colloid value (supernatant) (meq/L)}}{\text{Colloid Value (total) (meq/L)}} \times \frac{TS(\%)}{TS(\%) - SS(\%)} \times \text{SVI3000 (mL/g)}$$

(In the formula, the colloid value (supernatant) (meq/L) represents an amount of electric charge contained in a supernatant liquid obtained by subjecting organic wastewater to centrifugal separation at 3000 rpm for 5 minutes, the colloid value (total) (meq/L) represents an amount of electric charge contained in organic wastewater, TS (%) represents a weight percentage of total solids in organic wastewater, SS (%) represents a weight percentage of suspended solids in organic wastewater, and SVI 3000 (mL/g) represents a specific volume of a precipitate obtained by subjecting organic wastewater to centrifugal separation at 3000 rpm for 5 minutes.)

[13] A composition for treatment of organic wastewater, the composition containing a polymer flocculant, in which the composition is for forming a floc containing an organic nitrogen component by being added to organic wastewater containing an organic nitrogen component at 6%/SS or more and 20%/SS or less with respect to suspended solids (SS) and then separating and recovering the floc and the organic nitrogen component from the organic wastewater through solid-liquid separation.

[14] A composition for treatment of organic wastewater, the composition containing a polymer flocculant, in which the composition is for forming a floc containing a phosphorus compound by being added to organic wastewater containing an organic nitrogen component at 6%/SS or more and 20%/SS or less with respect to suspended solids (SS) and a phosphorus compound and then separating and recovering the floc and the phosphorus compound from the organic wastewater through solid-liquid separation.

[Examples]

Hereinafter, the present invention will be described in detail with reference to Examples and Comparative Examples, but the present invention is not limited by the following description unless the gist thereof is exceeded. Incidentally, in Examples and Comparative Examples, "%" means "mass%" unless otherwise specified. The respective polymers obtained in the following Production Examples were subjected to the following measurement of reduced viscosity. For the measurement, a powdery polymer flocculant was used.

[Measurement of Reduced Viscosity]

The polymer was prepared into a 0.1 g/dL polymer solution in a 1 N aqueous solution of sodium chloride and subjected to the measurement of reduced viscosity at 25°C using an Ostwald viscometer.

[Measurement of Proportion (mol%) of Constitutional Unit Derived from Each Monomer of Each Polymer]

Each polymer was dissolved in heavy water and subjected to the measurement of $^{13}C$-NMR spectrum using an NMR spectrometer (manufactured by JEOL Ltd., 270 MHz). The proportion (mol%) of the constitutional unit derived from each monomer of each polymer was calculated from the integral value of the peak corresponding to each repeating unit on the $^{13}C$-NMR spectrum.

The raw materials used in Examples are presented below.

[Monomers]

(i) Cationic Monomers:

(a) N,N-dimethylaminoethyl acrylate quaternary methyl chloride salt (hereinafter referred to as "DME"), manufactured by OSAKA ORGANIC CHEMICAL INDUSTRY LTD., 80 mass% aqueous solution

(b) N,N-dimethylaminoethyl methacrylate quaternary methyl chloride salt (hereinafter referred to as "DMC"), manufactured by OSAKA ORGANIC CHEMICAL INDUSTRY LTD., 80 mass% aqueous solution

(ii) Nonionic Monomers:

(a) Acrylamide (hereinafter referred to as "AAM"), manufactured by Mitsubishi Rayon Co., Ltd., 50 mass%

aqueous solution
(b) Acrylonitrile (hereinafter referred to as "AN"), manufactured by Mitsubishi Rayon Co., Ltd., purity of 99%
(c) N-vinylformamide (hereinafter referred to as "NVF"), manufactured by Mitsubishi Rayon Co., Ltd., aqueous solution having purity of 91 mass%

[Initiators]

(i) 2-hydroxy-2-methyl-1-phenylpropane-1-one (DAROCUR 1173) (hereinafter referred to as "D-1173"), manufactured by Ciba Specialty Chemicals Inc.
(ii) 2,2'-azobis(2-amidinopropane) dihydrochloride (V-50) (hereinafter referred to as "V-50"), manufactured by Wako Pure Chemical Industries, Ltd.

[Chain Transfer Agent]

Sodium hypophosphite (hereinafter referred to as "HPA"), manufactured by Wako Pure Chemical Industries, Ltd.

[Inorganic Coagulant]

Poly ferric sulfate, manufactured by Nittetsu Mining Co., Ltd., total iron content of 11.0% or more

[Synthesis of Nonamidine-Based Cationic Polymer (A)]

(Production Example 1)

In a brown heat-resistant bottle having an internal volume of 2000 mL, 256.3 g of DME and 595.0 g of AAM were put, 0.05 g of HPA and distilled water were added thereto, and thus an aqueous monomer solution (DME : AAM = 40.0 : 60.0 (mol%), monomer concentration: 50%) having a total mass of 2000 g was prepared. Next, D-1173 was added to the aqueous monomer solution so as to be 150 ppm with respect to the total mass of the aqueous monomer solution, and the temperature of the monomer aqueous solution was adjusted to 20°C while blowing nitrogen gas thereinto for 30 minutes.

Thereafter, the monomer aqueous solution was transferred to a stainless steel reaction vessel and irradiated with light from the top of the vessel at an irradiation intensity of 5 $W/m^2$ by using a chemical lamp until the surface temperature reached 40°C while spraying water at 16°C from the bottom of the vessel. The monomer aqueous solution was irradiated with light at an irradiation intensity of 0.3 $W/m^2$ for 30 minutes after the surface temperature reached 40°C. Furthermore, the monomer aqueous solution was irradiated with light at an irradiation intensity of 5 $W/m^2$ for 10 minutes in order to decrease the residual amount of monomer, thereby obtaining a polymer in the form of hydrogel. The polymer in the form of hydrogel thus obtained was taken out from the vessel, crushed by using a small meat chopper, and then dried at a temperature of 60°C for 16 hours. Thereafter, the dried polymer was pulverized by using a Wheelie type pulverizer to obtain a nonamidine-based cationic polymer (A) (polymer A-1).

(Production Examples 2 to 12)

Nonamidine-based cationic polymers (A) (polymers A-2 to A-12) were obtained by conducting the same operation as in Production Example 1 except that the amounts of each monomer and HPA were changed to the proportions described in Table 1.

[Synthesis of Nonamidine-Based Cationic Polymer (AH)]

(Production Examples 13 to 16)

Nonamidine-based cationic polymers (AH) (polymers AH-1 to AH-4) were obtained by conducting the same operation as in Production Example 1 except that the amounts of each monomer and HPA were changed to the proportions described in Table 1.

[Synthesis of Nonamidine-Based Cationic Polymer (AL)]

(Production Examples 17 and 18)

Nonamidine-based cationic polymers (AL) (polymers AL-1 and AL-2) were obtained by conducting the same operation as in Production Example 1 except that the amounts of each monomer and HPA were changed to the proportions described in Table 1.

[Table 1]

| | Polymer | Proportion of constitutional unit derived from each monomer [mol%] | | | HPA [ppm] | Reduced viscosity. [ηsp/C] |
|---|---|---|---|---|---|---|
| | | AAM | DME | DMC | | |
| Production Example 1 | A-1 | 80.0 | 20.0 | 0.0 | 30 | 13.9 |
| Production Example 2 | A-2 | 80.0 | 20.0 | 0.0 | 70 | 11.3 |
| Production Example 3 | A-3 | 60.0 | 40.0 | 0.0 | 65 | 9.5 |
| Production Example 4 | A-4 | 70.0 | 30.0 | 0.0 | 60 | 10.4 |
| Production Example 5 | A-5 | 60.0 | 40.0 | 0.0 | 20 | 15.8 |
| Production Example 6 | A-6 | 70.0 | 30.0 | 0.0 | 20 | 16.3 |
| Production Example 7 | A-7 | 70.0 | 30.0 | 0.0 | 70 | 8.7 |
| Production Example 8 | A-8 | 70.0 | 30.0 | 0.0 | 125 | 6.5 |
| Production Example 9 | A-9 | 70.0 | 30.0 | 0.0 | 10 | 18.8 |
| Production Example 10 | A-10 | 40.0 | 60.0 | 0.0 | 15 | 14.0 |
| Production Example 11 | A-11 | 90.0 | 10.0 | 0.0 | 25 | 13.3 |
| Production Example 12 | A-12 | 50.0 | 50.0 | 0.0 | 55 | 10.3 |
| Production Example 13 | AH-1 | 20.0 | 80.0 | 0.0 | 15 | 12.2 |
| Production Example 14 | AH-2 | 20.0 | 80.0 | 0.0 | 90 | 6.5 |
| Production Example 15 | AH-3 | 12.6 | 78.8 | 8.6 | 40 | 6.8 |
| Production Example 16 | AH-4 | 0 | 0 | 100.0 | 10 | 9.5 |
| Production Example 17 | AL-1 | 92.0 | 8.0 | 0.0 | 20 | 15.9 |
| Production Example 18 | AL-2 | 96.0 | 4.0 | 0.0 | 10 | 19.0 |

[Synthesis of Amidine-Based Cationic Polymer (B)]

(Production Example 19)

A mixture of 6 g of a mixture of AN and NVF (molar ratio 55 : 45) and 34 g of distilled water was put in a four-necked flask which had an internal volume of 50 mL and is equipped with a stirrer, a nitrogen introducing tube, and a cooling tube. Thereafter, the temperature was raised to 60°C while stirring the materials in nitrogen gas, 0.12 g of V-50 was added thereto, and the mixture was further held at 60°C for 3 hours, thereby obtaining a suspension in which a polymer was precipitated in water. To the suspension, 20 g of distilled water was added, concentrated hydrochloric acid was further added thereto in an amount to be one equivalent to the formyl group of the polymer, and the mixture was held at 100°C for 4 hours, thereby obtaining a yellow highly viscous liquid. This was added to a large amount of acetone to precipitate a polymer, the polymer gel thus obtained was chopped, dried at 60°C for twenty-four hours, and then pulverized, thereby obtaining an amidine-based cationic polymer (B) (polymer B-1).

The polymer B-1 was dissolved in heavy water and subjected to the measurement of $^{13}C$-NMR spectrum using an NMR spectrometer (manufactured by JEOL Ltd., 270 MHz). The composition of each constitutional unit was calculated from the integral value of the peak corresponding to each repeating unit on the $^{13}C$-NMR spectrum. The constitutional units of the general formula (2) and the general formula (3) were determined as the total amount thereof without distinguishing one from the other. The results are presented in Table 2.

[Table 2]

| | Constitutional unit* | Composition [mol%] | Reduced viscosity [$\eta$ sp/C] | Remarks |
|---|---|---|---|---|
| Production Example 19 Polymer B-1 | Amidine<br>NVF<br>AN<br>VAM | 52.0<br>1.6<br>22.4<br>24.0 | 4.5 | Modified product of AN/NVF = 55 mol%/45mol% polymer by hydrochloric acid |
| (*) Amidine: amidine hydrochloride constitutional unit, NVF: N-vinylformamide constitutional unit, AN: acrylonitrile constitutional unit, and VAM: vinylamine hydrochloride constitutional unit | | | | |

[Preparation of Polymer Flocculant]

(Production Examples 20 to 25)

The polymer flocculants (blends 1 to 6) described in Table 3 were obtained by mixing and preparing the polymers described in Table 1 and Table 2 at the respective mixing ratios described in Table 3.

[Table 3]

| | Polymer | Polymer used in blend | Proportion of each polymer to total mass of polymer flocculant [mass%/mass%] | Total cationic constitutional units in polymer flocculant [mol%] |
|---|---|---|---|---|
| Production Example 20 | Blend 1 | A-1/B-1 | 75/25 | 40.0 |
| Production 1 Example 21 | Blend 2 | A-4/B-1 | 90/10 | 37.0 |
| Production 1 Example 22 | Blend 3 | AL-1/B-1 | 50/50 | 54.0 |
| Production 1 Example 23 | Blend 4 | AH-4/AL-1 | 50/50 | 54.0 |
| Production 1 Example 24 | Blend 5 | AH-3/AL-2 | 25/75 | 24.9 |
| Production 1 Example 25 | Blend 6 | AH-3/AL-2 | 75/25 | 65.5 |

[Measurement of TS in Organic Wastewater]

The TS in organic wastewater were measured by the method of measuring TS described above.

[Measurement of SS in Organic Wastewater and Treated Water]

The SS in organic wastewater and treated water were measured by the method of measuring SS described above.

[Measurement of COD of Organic Wastewater and Treated Water]

The COD of organic wastewater and treated water was measured by the method of measuring COD (Mn) described in JIS K0102: 17.

[Measurement of Organic Nitrogen Component (Total Protein) in Organic Wastewater and Treated Water]

The organic nitrogen components (total protein) in organic wastewater and treated water were measured by the method of measuring proteins by the Bradford method in which the proteins were stained with a dye, Coomassie Brilliant Blue and the absorbance thereof was measured described above.

[Measurement of Soluble Protein in Organic Wastewater]

The soluble proteins in organic wastewater were measured by the method of measuring soluble proteins described above. In other words, soluble proteins were measured by the Bradford method in which the proteins in the supernatant liquid obtained by subjecting organic wastewater to centrifugal separation at 3000 rpm for 5 minutes were stained with a dye, Coomassie Brilliant Blue and the absorbance thereof was measured.

[Measurement of Total Phosphorus in Organic Wastewater and Treated Water]

The total phosphorus in organic wastewater and the treated water was measured by the method of measuring total phosphorus by the potassium peroxodisulfate decomposition method and molybdenum blue absorption spectrophotometry described above.

[Measurement of Colloid Value (Supernatant) of Organic Wastewater]

The colloidal value (supernatant) of organic wastewater was measured by the method of measuring colloidal value described above.

[Measurement of Colloid Value (Total) of Organic Wastewater]

The colloidal value (total) of organic wastewater was measured by the method of measuring colloidal value described above.

[Measurement of SVI 3000 of Organic Wastewater]

The SVI 3000 of organic wastewater was measured by the method of measuring SVI 3000 described above.

[Measurement of Colloid Ratio in Organic Wastewater]

The colloid ratio in organic wastewater was measured by the method of measuring colloid ratio described above.

(Examples 1 to 25 and Comparative Example 1)

[Organic Wastewater Used]

As the organic wastewater generated from a treatment facility of the dairy industry, wastewater which was dairy wastewater collected from the wastewater treatment facility of KW ranch and had the following properties was used. In other words, wastewater having a pH of 8.28, TS of 31580 mg/L, SS of 21800 mg/L, COD of 12000 mg/L, total protein

of 2380 mg/L, soluble proteins of 863 mg/L, organic nitrogen components to SS of 10.9%/SS, total phosphorus of 470 mg/L, a colloid value (supernatant) of -8.5 meq/L, a colloid value (total) of -10.4 meq/L, SVI 3000 of 13.5 mL/g, and a colloid ratio of 35.7 as measured by the analysis methods described in the JIS standard was used.

[Flocculation Test]

First, 300 mL of the organic wastewater was collected in a 500 mL beaker. Subsequently, each polymer described in Tables 1 to 3 was dissolved to be at 0.3% to prepare an aqueous solution of polymer flocculant, this was added to the organic wastewater so as to have the concentration presented in Tables 4 and 5, and then the mixture was stirred and mixed by using a spatula under the conditions of a stirring speed of 180 rpm and a stirring time of 60 seconds to form flocculated flocs. Thereafter, the flocculated flocs were precipitated, and the flocculated flocs and the treated water were separated.

[Evaluation Method]

[Particle Diameter of Flocculated Floc, SS in Treated Water, COD of Treated Water, Total Protein in Treated Water, and Total Phosphorus in Treated Water]

In each Example, flocculated flocs were formed, then stirring was stopped, and the particle diameter of the flocculated flocs was visually measured. Thereafter, the treated water was collected, and SS in the treated water, COD of the treated water, the total protein in the treated water, and the total phosphorus in the treated water were measured.

[Recovery Rate of Total Protein]

The recovery rate of total protein was determined from the total protein in the organic wastewater and treated water measured in each Example by the following formula.

[Math. 8]

$$\text{Recovery rate of total protein (\%)} = \left(1 - \frac{\text{Total protein in treated water}}{\text{Total protein in organic wastewater}}\right) \times 100$$

[Residual Rate of Protein]

The residual ratio of proteins was determined from the soluble proteins in the organic wastewater and the total protein in the treated water which were measured in each Example by the following formula.

[Math. 9]

$$\text{Residual ratio of protein (\%)} = \frac{\text{Total protein in treated water}}{\text{Soluble protein in organic wastewater}} \times 100$$

[Recovery Rate of Total Phosphorus]

The recovery rate of total phosphorus was determined from the total phosphorus in the organic wastewater and treated water measured in each Example by the following formula.

[Math. 10]

$$\text{Recovery rate of total phosphorus (\%)} = \left(1 - \frac{\text{Total phosphorus in treated water}}{\text{Total phosphorus in organic wastewater}}\right) \times 100$$

[Water Content in Dehydrated Cake]

The flocculated flocs were press dehydrated at a pressure of 0.1 MPa for 60 seconds to obtain a dehydrated cake, and the water content in the dehydrated cake was measured. The measurement of water content was conducted in conformity to "Sewerage Test Method Volume 1, 1997 edition" compiled by the Japan Sewerage Association, p 296 to 297.

[Table 4]

| Examples | Polymer flocculant | Amount added (ppm) | Particle diameter of flocculated floc (mm) | SS in treated water (mg/L) | COD of treated water (mg/L) | Water content in dehydrated cake (%) |
|---|---|---|---|---|---|---|
| Example 1 | Polymer A-1 | 600 | 4 | 286 | 980 | 79.4 |
| Example 2 | Polymer A-1 | 1000 | 5 | 226 | 860 | 78.4 |
| Example 3 | Polymer A-1 | 1400 | 7 | 162 | 790 | 78.2 |
| Example 4 | Polymer A-2 | 1000 | 5 | 212 | 880 | 78.3 |
| Example 5 | Polymer A-3 | 1000 | 6 | 306 | 980 | 78.2 |
| Example 6 | Polymer A-4 | 1000 | 6 | 304 | 980 | 78.6 |
| Example 7 | Polymer A-5 | 1000 | 6 | 325 | 990 | 78.7 |
| Example 8 | Polymer A-6 | 1000 | 6 | 330 | 980 | 78.7 |
| Example 9 | Polymer A-7 | 1000 | 4 | 390 | 1020 | 79.5 |
| Example 10 | Polymer A-8 | 1000 | 4 | 470 | 1100 | 79.4 |
| Example 11 | Polymer A-9 | 1000 | 4 | 370 | 1020 | 79.5 |
| Example 12 | Polymer A-9 | 1000 | 5 | 420 | 1140 | 80.1 |
| Example 16 | Polymer A-12 | 1000 | 4 | 430 | 1140 | 78.3 |
| Example 13 | Polymer AH-1 | 600 | 1 | 1250 | 2200 | 81.2 |

(continued)

| Examples | Polymer flocculant | Amount added (ppm) | Particle diameter of flocculated floc (mm) | SS in treated water (mg/ L ) | COD of treated water (mg/L) | Water content in dehydrated cake (%) |
|---|---|---|---|---|---|---|
| Example 14 | Polymer AH-1 | 1000 | 3 | 994 | 1880 | 80.4 |
| Example 15 | Polymer AH-1 | 1400 | 4 | 820 | 1640 | 79.5 |
| Example 18 | Polymer AH-2 | 1000 | 2 | 1280 | 2600 | 83.6 |
| Example 17 | Polymer AL-1 | 1000 | 4 | 1002 | 2080 | 84.5 |
| Example 19 | Polymer AL-2 | 1000 | 4 | 1370 | 2300 | 85.3 |
| Example 20 | Blend 1 | 1000 | 6 | 210 | 760 | 76.2 |
| Example 21 | Blend 2 | 1000 | 6 | 220 | 780 | 77.5 |
| Example 22 | Blend 3 | 1000 | 6 | 460 | 890 | 80.7 |
| Example 23 | Blend 4 | 1000 | 6 | 350 | 860 | 78.2 |
| Example 24 | Blend 5 | 1000 | 6 | 204 | 780 | 76.5 |
| Example 25 | Blend 6 | 1000 | 6 | 1160 | 1690 | 82.7 |
| Comparative Example 1 | Inorganic coagulant | 6000 | 0.5 | 2300 | 5400 | Unmeasurable |

[Table 5]

| Examples | Polymer flocculant | Amount added (ppm) | Total protein in treated water (mg/L) | Recovery rate of total protein (%) | Residual rate of proteins (%) | Total phosphorus in treated water (mg/L) | Recovery rate of total phosphorus (%) |
|---|---|---|---|---|---|---|---|
| Example 1 | Polymer A-1 | 600 | 92 | 96 | 11 | 45 | 90 |
| Example 2 | Polymer A-1 | 1000 | 62 | 97 | 7 | 21 | 96 |
| Example 3 | Polymer A-1 | 1400 | 42 | 98 | 5 | 17 | 96 |
| Example 4 | Polymer A-2 | 1000 | 64 | 97 | 7 | 24 | 95 |
| Example 5 | Polymer A-3 | 1000 | 103 | 96 | 12 | 35 | 93 |
| Example 6 | Polymer A-4 | 1000 | 112 | 95 | 13 | 32 | 93 |
| Example 7 | Polymer A-5 | 1000 | 108 | 95 | 13 | 31 | 93 |
| Example 8 | Polymer A-6 | 1000 | 110 | 95 | 13 | 35 | 93 |

(continued)

| Examples | Polymer flocculant | Amount added (ppm) | Total protein in treated water (mg/L) | Recovery rate of total protein (%) | Residual rate of proteins (%) | Total phosphorus in treated water (mg/L) | Recovery rate of total phosphorus (%) |
|---|---|---|---|---|---|---|---|
| Example 9 | Polymer A-7 | 1000 | 150 | 94 | 17 | 69 | 85 |
| Example 10 | Polymer A-8 | 1000 | 190 | 92 | 22 | 84 | 82 |
| Example 11 | Polymer A-9 | 1000 | 158 | 93 | 18 | 67 | 86 |
| Example 12 | Polymer A-9 | 1000 | 220 | 91 | 25 | 110 | 77 |
| Example 16 | Polymer A-12 | 1000 | 252 | 89 | 29 | 120 | 74 |
| Example 13 | Polymer AH-1 | 600 | 416 | 83 | 48 | 210 | 55 |
| Example 14 | Polymer AH-1 | 1000 | 380 | 84 | 44 | 182 | 61 |
| Example 15 | Polymer AH-1 | 1400 | 340 | 86 | 39 | 149 | 68 |
| Example 18 | Polymer AH-2 | 1000 | 420 | 82 | 49 | 198 | 58 |
| Example 17 | Polymer AL-1 | 1000 | 413 | 83 | 48 | 187 | 60 |
| Example 19 | Polymer AL-2 | 1000 | 423 | 82 | 49 | 220 | 53 |
| Example 20 | Blend 1 | 1000 | 62 | 97 | 7 | 22 | 95 |
| Example 21 | Blend 2 | 1000 | 106 | 96 | 12 | 14 | 97 |
| Example 22 | Blend 3 | 1000 | 62 | 97 | 7 | 112 | 76 |
| Example 23 | Blend 4 | 1000 | 220 | 91 | 25 | 112 | 76 |
| Example 24 | Blend 5 | 1000 | 42 | 98 | 5 | 20 | 96 |
| Example 25 | Blend 6 | 1000 | 532 | 78 | 62 | 183 | 61 |
| Comparative Example 1 | Inorganic coagulant | 6000 | 1020 | 57 | 118 | 320 | 32 |

As presented in Tables 4 and 5, in Examples 1 to 25 in which the organic wastewater in the range to be targeted by the method of treating organic wastewater according to the present invention was treated according to the method of treating organic wastewater according to the present invention, coarse flocculated flocs were formed, SS and COD of the treated water were low, and treated water of high quality was obtained. In addition, the total protein and total phosphorus in the treated water were low and thus favorable total protein and total phosphorus recovery performance was exhibited.

In addition, in Examples 1 to 16 and 20 to 24 in which the content of the cationic constitutional unit is within a range of from 10 to 60 mol% with respect to the sum of all the constitutional units of the respective polymer flocculants constituting the polymer flocculant, the recovery rate of total protein and the recovery rate of total phosphorus were high, the residual rate of proteins was low, and thus particularly excellent total protein and total phosphorus recovery performance was exhibited.

As presented in Tables 4 and 5, Comparative Example 1 is the results obtained by conducting the flocculation treatment of organic wastewater using an inorganic coagulant to be out of the range of the method of treating organic wastewater according to the present invention and has high SS and COD of treated water. In addition, the total protein and total phosphorus of the treated water were high and thus it was not possible to confirm a favorable effect of recovering proteins and total phosphorus.

(Examples 26 to 28)

[Organic Wastewater Used]

As the organic wastewater generated from a treatment facility of the swine industry, wastewater which was swine wastewater collected from the wastewater treatment facility of HT animal husbandry and had the following properties was used. In other words, wastewater having a pH of 6.56, TS of 47320 mg/L, SS of 33300 mg/L, COD of 6540 mg/L, total protein of 3020 mg/L, soluble proteins of 895 mg/L, organic nitrogen components to SS of 9.1%/SS, total phosphorus of 475 mg/L, a colloid value (supernatant) of -3.5 meq/L, a colloid value (total) of -10.1 meq/L, and a colloid ratio of 8.6 as measured by the analysis methods described in the JIS standard was used.

[Flocculation Test]

The same flocculation test as in Example 1 was conducted except that the polymer flocculant used in the test was changed as presented in Tables 6 and 7. The evaluation results in Examples 26 to 28 are presented in Tables 6 and 7.

[Table 6]

| Examples | Polymer flocculant | Amount added (ppm) | Particle diameter of flocculated floc (mm) | SS in treated water (mg/L) | COD of treated water (Mn) (mg/L) | Water content in dehydrated cake (%) |
|---|---|---|---|---|---|---|
| Example 26 | Polymer A-3 | 400 | 3 | 108 | 2220 | 73.7 |
| Example 27 | Polymer A-10 | | 3 | 198 | 2370 | 74.8 |
| Example 28 | Polymer AH-3 | | 2 | 240 | 2840 | 75.8 |

[Table 7]

| Examples | Polymer flocculant | Amount added (ppm) | Total protein in treated water (mg/L) | Recovery rate of total protein (%) | Residual rate of proteins (%) | Total phosphorus in treated water (mg/L) | Recovery rate of total phosphorus (%) |
|---|---|---|---|---|---|---|---|
| Example 26 | Polymer A-3 | 400 | 264 | 91 | 29 | 122 | 74 |
| Example 27 | Polymer A-10 | | 313 | 90 | 35 | 130 | 73 |
| Example 28 | Polymer AH-3 | | 420 | 86 | 47 | 188 | 60 |

As presented in Tables 6 and 7, in Examples 26 to 28 in which the organic wastewater in the range to be targeted by the method of treating organic wastewater according to the present invention was treated according to the method of treating organic wastewater according to the present invention, coarse flocculated flocs were formed, SS and COD of the treated water were low, and treated water of high quality was obtained. In addition, the total protein and total phosphorus in the treated water were low and thus favorable total protein and total phosphorus recovery performance was exhibited.

In addition, in Examples 26 and 27 in which the content of the cationic constitutional unit is within a range of from 10 to 60 mol% with respect to the sum of all the constitutional units of the respective polymer flocculants constituting the polymer flocculant, the recovery rate of total protein and the recovery rate of total phosphorus were high, the residual rate of proteins was low, and thus particularly excellent total protein and total phosphorus recovery performance was exhibited.

(Examples 29 and 30)

[Organic Wastewater Used]

As the organic wastewater generated from a treatment facility of a sewage treatment plant, wastewater which was mixed raw sludge collected from the wastewater treatment facility of TK treatment plant and had the following properties was used. In other words, wastewater having a pH of 5.43, TS of 25800 mg/L, SS of 23200 mg/L, COD of 9400 mg/L, total protein of 1530 mg/L, soluble proteins of 124 mg/L, organic nitrogen components to SS of 6.6%/SS, total phosphorus of 2690 mg/L, a colloid value (supernatant) of -0.5 meq/L, a colloid value (total) of -8.4 meq/L, SVI 3000 of 15.7 mL/g, and a colloid ratio of 8.3 as measured by the analysis methods described in the JIS standard was used.

[Flocculation Test]

The same flocculation test as in Example 1 was conducted except that the polymer flocculant used in the test was changed as presented in Tables 8 and 9. The evaluation results in Examples 29 and 30 are presented in Tables 8 and 9.

[Table 8]

| Examples | Polymer flocculant | Amount added (ppm) | Particle diameter of flocculated floc (mm) | SS in treated water (mg/L) | COD of treated water (Mn) (mg/L) | Water content in dehydrated cake (%) |
|---|---|---|---|---|---|---|
| Example 29 | Polymer A-1 | 150 | 4 | 240 | 340 | 82.2 |
| Example 30 | Polymer AH-3 | | 2 | 220 | 380 | 81.4 |

[Table 9]

| Examples | Polymer flocculant | Amount added (ppm) | Total protein in treated water (mg/L) | Recovery rate of total protein (%) | Residual rate of proteins (%) | Total phosphorus in treated water (mg/L) | Recovery rate of total phosphorus (%) |
|---|---|---|---|---|---|---|---|
| Example 29 | Polymer A-1 | 150 | 36 | 98 | 29 | 690 | 74 |
| Example 30 | Polymer AH-3 | | 82 | 95 | 66 | 1230 | 54 |

As presented in Tables 8 and 9, in Examples 29 and 30 in which the organic wastewater in the range to be targeted by the method of treating organic wastewater according to the present invention was treated according to the method of treating organic wastewater according to the present invention, coarse flocculated flocs were formed, SS and COD of the treated water were low, and treated water of high quality was obtained. In addition, the total protein and total phosphorus in the treated water were low and thus favorable total protein and total phosphorus recovery performance was exhibited.

In addition, in Example 29 in which the content of the cationic constitutional unit is within a range of from 10 to 60 mol% with respect to the sum of all the constitutional units of the respective polymer flocculants constituting the polymer flocculant, the recovery rate of total protein and the recovery rate of total phosphorus were high, the residual rate of proteins was low, and thus particularly excellent total protein and total phosphorus recovery performance was

exhibited.

(Examples 31 and 32)

[Organic Wastewater Used]

As the organic wastewater generated from a treatment facility of the swine industry, wastewater which was swine wastewater collected from the wastewater treatment facility of HT animal husbandry and had the following properties was used. In other words, wastewater having a pH of 6.63, TS of 48700 mg/L, SS of 37000 mg/L, COD of 6840 mg/L, total protein of 3710 mg/L, soluble proteins of 1160 mg/L, organic nitrogen components to SS of 10.0%/SS, total phosphorus of 6470 mg/L, a colloid value (supernatant) of -1.4 meq/L, a colloid value (total) of -8.2 meq/L, SVI 3000 of 7.1 mL/g, and a colloid ratio of 5.0 as measured by the analysis methods described in the JIS standard was used.

[Flocculation Test]

The same flocculation test as in Example 1 was conducted except that the polymer flocculant used in the test was changed as presented in Tables 10 and 11. The evaluation results in Examples 31 and 32 are presented in Tables 10 and 11.

[Table 10]

| Examples | Polymer flocculant | Amount added (ppm) | Particle diameter of flocculated floc (mm) | SS in treated water (mg/L) | COD of treated water (Mn) (mg/L) | Water content in dehydrated cake (%) |
|---|---|---|---|---|---|---|
| Example 31 | Polymer A-1 | 450 | 2 | 420 | 3020 | 76.2 |
| Example 32 | Polymer AH-1 | | 2 | 480 | 3040 | 75.8 |

[Table 11]

| Examples | Polymer flocculant | Amount added (ppm) | Total protein in treated water (mg/L) | Recovery rate of total protein (%) | Residual rate of proteins (%) | Total phosphorus in treated water (mg/L) | Recovery rate of total phosphorus (%) |
|---|---|---|---|---|---|---|---|
| Example 31 | Polymer A-1 | 450 | 790 | 79 | 68 | 1780 | 72 |
| Example 32 | Polymer AH-1 | | 790 | 79 | 68 | 2720 | 58 |

As presented in Tables 10 and 11, in Examples 31 and 32 in which the organic wastewater in the range to be targeted by the method of treating organic wastewater according to the present invention was treated according to the method of treating organic wastewater according to the present invention, coarse flocculated flocs were formed, SS and COD of the treated water were low, and treated water of high quality was obtained. In addition, the total protein and total phosphorus in the treated water were low and thus favorable total protein and total phosphorus recovery performance was exhibited.

In addition, in Example 31 in which the content of the cationic constitutional unit is within a range of from 10 to 60 mol% with respect to the sum of all the constitutional units of the respective polymer flocculants constituting the polymer flocculant, the recovery rate of total protein and the recovery rate of total phosphorus were high, the residual rate of proteins was low, and thus particularly excellent total protein and total phosphorus recovery performance was exhibited.

(Comparative Examples 2 and 3)

[Organic Wastewater Used]

As the organic wastewater generated from a treatment facility of a sewage treatment plant, wastewater which was mixed raw sludge collected from the wastewater treatment facility of OG treatment plant and had the following properties was used. In other words, wastewater having a pH of 7.73, TS of 22640 mg/L, SS of 18100 mg/L, COD of 4200 mg/L, total protein of 835 mg/L, soluble proteins of 280 mg/L, organic nitrogen components to SS of 4.5%/SS, total phosphorus of 630 mg/L, a colloid value (supernatant) of -2.5 meq/L, a colloid value (total) of -20.4 meq/L, SVI 3000 of 17.6 mL/g, and a colloid ratio of 11.6 as measured by the analysis methods described in the JIS standard was used.

[Flocculation Test]

The same flocculation test as in Example 1 was conducted except that the polymer flocculant used in the test was changed as presented in Tables 12 and 13. The evaluation results in Comparative Examples 2 and 3 are presented in Tables 12 and 13.

[Table 12]

| Examples | Polymer flocculant | Amount added (ppm) | Particle diameter of flocculated floc (mm) | SS in treated water (mg/L) | COD of treated water (Mn) (mg/L) | Water content in dehydrated cake (%) |
|---|---|---|---|---|---|---|
| Comparative Example 2 | Polymer A-1 | 320 | 8 | 360 | 520 | 82.2 |
| Comparative Example 3 | Blend 5 | | 3 | 380 | 540 | 82.8 |

[Table 13]

| Examples | Polymer flocculant | Amount added (ppm) | Total protein in treated water (mg/L) | Recovery rate of total protein (%) | Residual rate of proteins (%) | Total phosphorus in treated water (mg/L) | Recovery rate of total phosphorus (%) |
|---|---|---|---|---|---|---|---|
| Comparative Example 2 | Polymer A-1 | 320 | 270 | 68 | 96 | 370 | 41 |
| Comparative Example 3 | Blend 5 | | 320 | 62 | 114 | 430 | 32 |

As presented in Tables 12 and 13, in Comparative Examples 2 and 3 in which the organic wastewater to be out of the target of the method of treating organic wastewater according to the present invention was treated with the polymer flocculant used in the method of treating organic wastewater according to the present invention, the recovery rate of total protein and the recovery rate of total phosphorus were low, the residual rate of proteins was high, and thus it was not possible to confirm a favorable effect of recovering proteins and total phosphorus.

[Industrial Applicability]

According to the method of treating organic wastewater according to the present invention, favorable flocculated flocs containing a large amount of organic nitrogen components are formed by adding and mixing a polymer flocculant with the organic wastewater without conducting a complicated pretreatment in the flocculation treatment of organic wastewater. Hence, it is possible to efficiently separate and recover organic nitrogen components and phosphorus compounds in organic wastewater as solids, to greatly decrease SS, BOD, and COD in the separated liquid, and to obtain treated water of high quality.

## Claims

1. A method of treating organic wastewater, the method comprising:

   forming a floc by adding a polymer flocculant to organic wastewater containing an organic nitrogen component at 6%/SS or more and 20%/SS or less with respect to suspended solids (SS); and
   separating the floc from the organic wastewater through solid-liquid separation.

2. The method of treating organic wastewater according to claim 1, wherein the floc is a floc containing an organic nitrogen component.

3. The method of treating organic wastewater according to claim 2, wherein a recovery rate denoted by a weight ratio of an amount of an organic nitrogen component contained in the separated floc to an organic nitrogen component contained in the organic wastewater is 70% or more and 100% or less.

4. The method of treating organic wastewater according to claim 2 or 3, wherein a ratio of an organic nitrogen component contained in treated water obtained through the solid-liquid separation to an organic nitrogen component contained in a supernatant liquid obtained by subjecting the organic wastewater to centrifugal separation at 3000 rpm for 5 minutes is 0% or more and 70% or less.

5. The method of treating organic wastewater according to any one of claims 1 to 4, wherein the organic wastewater contains a phosphorus compound and the floc is a floc containing a phosphorus compound.

6. The method of treating organic wastewater according to claim 5, wherein a recovery rate denoted by a weight ratio of an amount of a phosphorus compound contained in the separated floc to a phosphorus compound contained in the organic wastewater is 50% or more and 100% or less.

7. The method of treating organic wastewater according to any one of claims 1 to 6, wherein the polymer flocculant is a polymer flocculant (X) including at least one or more kinds of polymer flocculants, and the polymer flocculant (X) contains a cationic constitutional unit at 10 mol% or more and 60 mol% or less with respect to a sum of all constitutional units of respective polymer flocculants constituting the polymer flocculant (X).

8. The method of treating organic wastewater according to claim 7, wherein the polymer flocculant (X) is a nonamidine-based cationic polymer (A) having a cationic constitutional unit represented by the following general formula (1):

   [Chem. 1]

   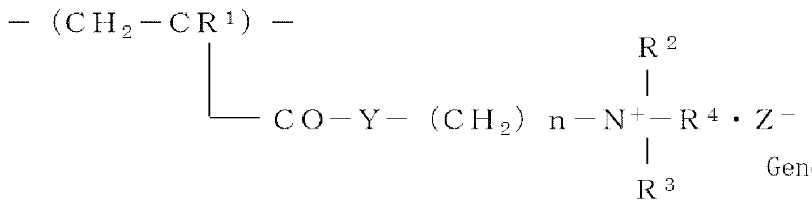

   General formula (1)

   (in the general formula (1), $R^1$ represents a hydrogen atom or a methyl group, $R^2$ and $R^3$ each independently represent any one of a hydrogen atom or an alkyl group having from 1 to 4 carbon atoms, $R^4$ represents an alkyl group having from 1 to 4 carbon atoms or a benzyl group, Y represents an oxygen atom or NH, $Z^-$ represents an anion, and n represents an integer from 1 to 3).

9. The method of treating organic wastewater according to claim 8, wherein the polymer flocculant (X) includes a mixture of a nonamidine-based cationic polymer (AH) containing a cationic constitutional unit represented by the general formula (1) at 80 mol% or more and 100 mol% or less with respect to all constitutional units of a polymer flocculant and a nonamidine-based cationic polymer (AL) containing a cationic constitutional unit represented by the general formula (1) at 1 mol% or more and 10 mole% or less with respect to all constitutional units of a polymer flocculant.

**10.** The method of treating organic wastewater according to any one of claims 1 to 9, wherein the polymer flocculant (X) further includes an amidine-based cationic polymer (B), and the amidine-based cationic polymer (B) has at least one among amidine constitutional units represented by the following general formula (2) and the following general formula (3):

[Chem. 2]

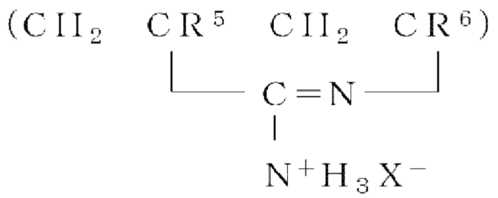

General formula (2)

[Chem. 3]

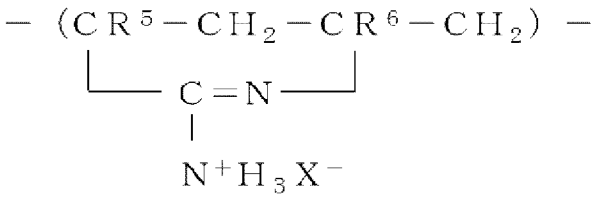

General formula (3)

(in the general formulas (2) and (3), each of $R^5$ and $R^6$ independently represent a hydrogen atom or a methyl group and $X^-$ represents an anion).

**11.** The method of treating organic wastewater according to any one of claims 1 to 10, wherein an organic nitrogen component in the organic wastewater is 800 mg/L or more and 10000 mg/L or less.

**12.** The method of treating organic wastewater according to any one of claims 1 to 11, wherein a colloid ratio in the organic wastewater determined by the following formula is 5.0 or more:

[Math. 1]

$$\text{Colloid ratio} = \frac{\text{Colloid value (supernatant) (meq/L)}}{\text{Colloid Value (total) (meq/L)}} \times \frac{\text{TS(\%)}}{\text{TS(\%) - SS(\%)}} \times \text{SVI3000 (mL/g)}$$

(in the formula, the colloid value (supernatant) (meq/L) represents an amount of electric charge contained in a supernatant liquid obtained by subjecting organic wastewater to centrifugal separation at 3000 rpm for 5 minutes, the colloid value (total) (meq/L) represents an amount of electric charge contained in organic wastewater, TS (%) represents a weight percentage of total solids in organic wastewater, SS (%) represents a weight percentage of suspended solids in organic wastewater, and SVI 3000 (mL/g) represents a specific volume of a precipitate obtained by subjecting organic wastewater to centrifugal separation at 3000 rpm for 5 minutes).

**13.** A composition for treatment of organic wastewater, the composition comprising a polymer flocculant, wherein the composition is for forming a floc containing an organic nitrogen component by being added to organic wastewater containing an organic nitrogen component at 6%/SS or more and 20%/SS or less with respect to suspended solids (SS) and then separating and recovering the floc and the organic nitrogen component from the organic wastewater through solid-liquid separation.

**14.** A composition for treatment of organic wastewater, the composition comprising a polymer flocculant, wherein the composition is for forming a floc containing a phosphorus compound by being added to organic wastewater containing an organic nitrogen component at 6%/SS or more and 20%/SS or less with respect to suspended

solids (SS) and a phosphorus compound and then separating and recovering the floc and the phosphorus compound from the organic wastewater through solid-liquid separation.

## INTERNATIONAL SEARCH REPORT

International application No.
PCT/JP2016/077966

A. CLASSIFICATION OF SUBJECT MATTER
*C02F1/56*(2006.01)i, *B01D21/01*(2006.01)i, *C08F8/48*(2006.01)i, *C08F220/34*(2006.01)i, *C08F220/44*(2006.01)i

According to International Patent Classification (IPC) or to both national classification and IPC

B. FIELDS SEARCHED

Minimum documentation searched (classification system followed by classification symbols)
C02F1/56, B01D21/01, C08F8/48, C08F220/34, C08F220/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 5-345195 A (Mitsubishi Heavy Industries, Ltd.), 27 December 1993 (27.12.1993), claims; paragraphs [0001], [0005] to [0009], [0013] to [0015]; fig. 1 to 2 (Family: none) | 1-4,13<br>5-12,14 |
| Y | JP 2009-214069 A (Dia-Nitrix Co., Ltd.), 24 September 2009 (24.09.2009), claims; paragraphs [0018], [0044] to [0047] (Family: none) | 5-12,14 |
| Y | JP 2003-62578 A (Sanyo Electric Co., Ltd.), 04 March 2003 (04.03.2003), claims; paragraph [0001] (Family: none) | 5-12,14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>07 December 2016 (07.12.16) | Date of mailing of the international search report<br>20 December 2016 (20.12.16) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.
PCT/JP2016/077966

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2014-155898 A (Mitsubishi Rayon Co., Ltd.), 28 August 2014 (28.08.2014), claims; paragraphs [0027] to [0029] (Family: none) | 7-12 |
| A | JP 2009-279537 A (IHI Corp.), 03 December 2009 (03.12.2009), (Family: none) | 1-14 |
| A | US 5520820 A (ALLIED COLLOIDS LTD.), 28 May 1996 (28.05.1996), & GB 9201583 D0 & WO 1993/014852 A1 & EP 633805 A1 & AU 3362793 A & CA 2128339 A1 | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7178399 A
- JP 2013039539 A


### Non-patent literature cited in the description


- Sewerage Test Method. Japan Sewerage Association, 1997, vol. 1, 296-297